# EUROPÄISCHE PATENTSCHRIFT

(11) **EP 2 464 757 B1**
(45) Veröffentlichungstag und Bekanntmachung des Hinweises auf die Patenterteilung: **07.08.2013**
(21) Anmeldenummer: 10745156.9
(22) Anmeldetag: 09.08.2010
(51) Int. Cl.: C21C 5/46, C21C 5/52, F27B 3/20, F27B 3/22, F27D 99/00, F27D 1/16

(54) **LANZE FÜR EINE SCHMELZGEFÄSSANLAGE ODER EIN METALLURGISCHES REAKTIONSGEFÄSS**
LANCE FOR A SMELTING VESSEL SYSTEM OR A METALLURGICAL REACTION VESSEL
LANCE DESTINÉE À UNE INSTALLATION DE CUVE DE FUSION OU À UNE CUVE DE RÉACTION MÉTALLURGIQUE

(30) Priorität: 10.08.2009 DE 102009036552; 16.05.2010 DE 102010024035
(43) Veröffentlichungstag der Anmeldung: 20.06.2012
(73) Patentinhaber: SMS Siemag AG, 40237 Düsseldorf (DE)
(72) Erfinder: SÖNTGEN, Thomas, 46499 Hamminkeln (DE); WISSEN, Christoph, 47259 Duisburg (DE); BEST, Rolf, 45966 Gladbeck (DE)
(74) Vertreter: Klüppel, Walter
(86) Internationale Anmeldenummer: PCT/EP2010/004851
(87) Internationale Veröffentlichungsnummer: WO 2011/018197

(56) Entgegenhaltungen:
- WO-A1-02/075004
- BE-A6- 1 009 318
- DE-A1- 2 521 833
- GB-A- 1 323 448
- US-A- 5 932 169

## Beschreibung

Die Erfindung bezieht sich auf ein Schmelzgefäßanlage oder ein metallurgisches Reaktionsgefäß mit einer Lanze, die mit einer Beschichtung ausgestattet ist, nach dem Oberbegriff des Patentanspruchs 1.

Für die Stahlerzeugung ist eine Reihe von Vorrichtungen bekannt, die über den Weg von Hochofen und Konverter überwiegend heißes, flüssiges Roheisen in Kombination mit Schrott, Erz, Eisenschwamm und anderen Einsatzstoffen verarbeiten. Ebenso kommen Schmelzgefäße zum Einsatz, beispielsweise Elektro-Lichtbogenöfen, bei denen überwiegend kalte oder vorgewärmte Einsatzstoffe wie Schrott und Eisenschwamm verwendet werden.

In der DE 195 09 285 A1 wird eine Doppelofenanlage zur Verarbeitung von flüssigem Roheisen und Eisenschwamm im Lichtbogenofen erwähnt. Hierbei ist die Verarbeitung von flüssigem Roheisen bis zu einem Anteil von maximal 70 % möglich, da in dem Ofengefäß, in dem zuerst der hohe Anteil von Roheisen chargiert wird, zunächst bei gleichzeitiger Zugabe von kaltem Eisenschwamm und Kalk mit Sauerstoff über eine Blaslanze gefrischt wird.

Die Blaslanze ist auf einem um eine Säule geführten Lanzenschlitten mit einem starren Ausleger eingespannt und über eine Hub- und Senkvorrichtung in das Ofengefäß absenkbar und herausziehbar. Die Hub- und Senkvorrichtung bewegt einen in einer Winde eingespannten endlosen Seilzug. Die Blaslanze ist als Mehrdüsenlanze mit Wasserkühlung ausgeführt.

In der EP 0 364 825 A1 wird eine Vorrichtung zur diskontinuierlichen Messdatenerfassung einer Schmelze in einem eine Durchtrittsöffnung aufweisenden metallurgischen Gefäß, insbesondere in einem Schmelzaggregat oder einem Tiegel zur Durchführung des Frischvorgangs, bestehend aus einem auf einer Fahrbahn angeordneten Lanzenschlitten, der eine Messlanze trägt, die sich von einer Warteposition außerhalb des metallurgischen Gefäßes durch eine Durchtrittsöffnung in eine Mess- und Probenahmeposition im Inneren des metallurgischen Gefäßes bringen lässt. Die Messlanze dient zur Überwachung des Frischvorgangs durch Temperaturmessungen der Schmelze und durch Probenahmen zwecks Analyse der Schmelze. Die Messlanze weist an ihrem in die Schmelze eintauchenden Ende eine auswechselbare Messkartusche oder eine Probenahmesonde zur Entnahme einer Probe der Schmelze auf. Die Messlanze wird auch als Sublanze bezeichnet.

Bei derartigen Blas- wie auch den Messlanzen besteht das Problem, dass sich Schlacke- oder Metallpartikel oder sonstige Teile aus der Schmelze auf der Mantelfläche festsetzen. Aus der JP 03 090507 A ist es bekannt, eine Graphitpulver und ein Bindemittel enthaltende Mischung zur Beschichtung der Lanze einzusetzen, um das Ansetzen und das Verfestigen von Metallpartikeln auf der Lanzenoberfläche zu verhindern. Der Graphitanteil beträgt zwischen 20 und 60 %; das Bindemittel enthält organische Komponenten wie z. B. Stärke. In der Konverteratmosphäre wird das Bindemittel durch das Einblasen des Sauerstoffs heftig oxidiert, und es verbleibt eine Beschichtung auf der Lanze, die widerstandsfähig gegen das Anhaften geschmolzenen Metalls auf der Lanze ist.

In der JP 04 124213 A wird ein Lanzenrohr beschrieben, die aus einem niedriglegierten Kohlenstoffstahl oder aus einer Eisen-Aluminium-Legierung besteht und die auf ihrer Außenseite wärmeisolierende Schichten aufweist. Diese bestehen aus Fasern, die aus Keramik, Glas, Steinwolle, Silikat, Tonerde oder Siliciumcarbid hergestellt sind und mittels eines anorganischen Klebemittels, das Silikat, Phosphat, Kieselsol, etc. umfasst, geformt und gebunden werden.

Aus der GB 1 323 448 A, DE 60 216 751 und der BE 1009 318 A6 sind Lanzen mit Beschichtungen aus Bornitrid und/oder Borcarbid bekannt. Aus der DE 25 21 833 A1 ist es bekannt, Werkzeuge zum Entfernen von Schlacken vorzusehen, die an dem Schaft einer Lanze anhaften.

In der US 5,932,169 wird eine Lanze mit einer keramischen Beschichtung beschrieben, wobei die Beschichtung mittels einer ringförmigen Auftragvorrichtung, durch die die Lanze hindurchführbar ist, aufgetragen wird.

Es die Aufgabe der Erfindung, die eingangs genannte Schmelzgefäßanlage oder das metallurgische Reaktionsgefäß in Hinblick auf den Einsatz der Lanze zu verbessern.

Erfindungsgemäß wird diese Aufgabe bei einer Schmelzgefäßanlage bzw. einem metallurgischen Reaktionsgefäß der eingangs genannten Art dadurch gelöst, dass an der Auftragvorrichtung Abstreifer angebracht sind.

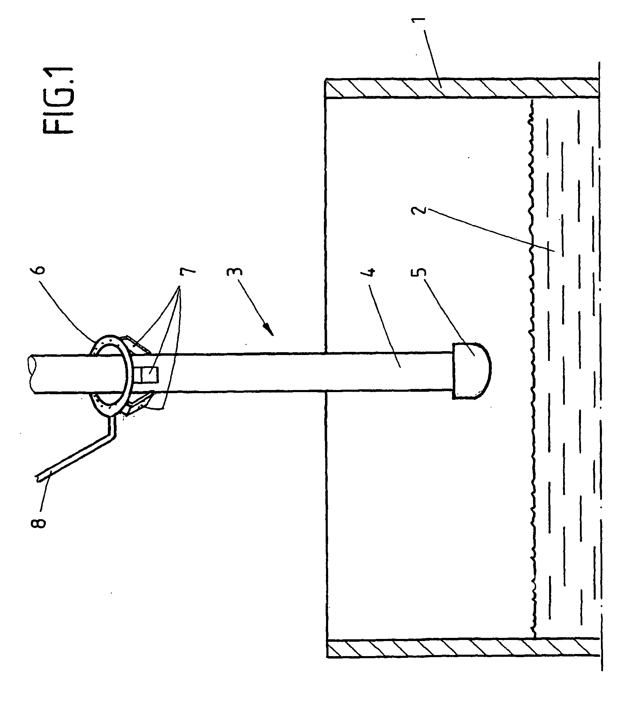

Vorteilhafte Weiterbildungen der Erfindung ergeben sich aus den Unteransprüchen, der Beschreibung und der Zeichnung.

Nachstehend wird die Erfindung anhand einer Zeichnung in einem Ausführungsbeispiel näher erläutert. Die Zeichnung zeigt eine Schnittansicht des oberen Bereichs eines Konverters mit einer aus der Schmelze herausgefahrenen Lanze.

Ein Konverter 1 (Figur) zum Schmelzen eines Metalls, insbesondere von Stahl, weist eine mittels einer (nicht dargestellten) Führung in eine Schmelze 2 hinein- und herausfahre Lanze 3 auf. Diese umfasst ein Lanzenrohr 4 und einen Lanzenkopf 5 an ihrem unteren Ende. Der Lanzenkopf 5 dient dazu, Sauerstoff in die Schmelze einzublasen.

Fest mit dem Konverter 1 verbunden oder gesondert von diesem lösbar ist eine Auftragvorrichtung 6 in Ringform mit einer Vielzahl von der Mantelwand des Lanzenrohrs 4 sowie dem Lanzenkopf 5 zugewandten Düsen zum Aufsprühen eines Beschichtungsmaterials. Dieses wird in flüssiger oder pastöser Form durch eine Zuführungsleitung 8 zugeführt.

Ferner sind, insbesondere in Verbindung mit der Auftragvorrichtung 6, Abstreifer 7, beispielsweise in der Form von an der ringförmigen Auftragvorrichtung 6 angebrachten Klappen oder Abstreiferfingern, vorgesehen, durch die sich die Beschichtung der Lanze 3 abstreifen lässt, wenn diese durch eine neue Beschichtung ersetzt werden soll. Die Abstreifer 7 werden von der Lanze 3 abgeschwenkt, wenn diese mit dem Beschichtungsmaterial beschichtet werden soll oder wenn die Lanze 3 in Betrieb ist.

Die Erfindung eignet sich sowohl für eine Blaslanze als auch für eine zu Messzwecken eingesetzte Sublanze.

### Bezugszeichenliste

- 1: Konverter
- 2: Schmelze
- 3: Lanze
- 4: Lanzenrohr
- 5: Lanzenkopf
- 6: Auftragvorrichtung
- 7: Abstreifer
- 8: Zuführungsleitung

## Patentansprüche

1. Schmelzgefäßanlage (1) oder metallurgisches Reaktionsgefäß mit einer Lanze (3), die mit einer Beschichtung ausgestattet ist, wobei die Beschichtung Bornitrid und/oder Borcarbid enthält, das insbesondere in Form einer keramischen Paste auf die Lanze (3) aufgebracht ist, wobei die Schmelzgefäßanlage bzw. das metallurgische Reaktionsgefäß eine die Lanze (3) ringförmig umgebende Auftragvorrichtung (6) zum Aufbringen von Beschichtungsmaterial aufweist, durch die die Lanze (3) hindurchführbar ist,
**dadurch gekennzeichnet,**
**dass** an der Auftragvorrichtung (6) Abstreifer (7) angebracht sind.

2. Schmelzgefäßanlage (1) oder metallurgisches Reaktionsgefäß nach Anspruch 1,
**dadurch gekennzeichnet,**
**dass** die Abstreifer (7) in Form von Klappen oder Abstreiferfingern an der Auftragvorrichtung (6) angebracht sind.

3. Schmelzgefäßanlage (1) oder metallurgisches Reaktionsgefäß nach Anspruch 1 oder 2,
**dadurch gekennzeichnet,**
**dass** die Abstreifer (7) abschwenkbar an der Auftragvorrichtung (6) angebracht sind.

4. Schmelzgefäßanlage (1) oder metallurgisches Reaktionsgefäß nach einem der Ansprüche 1 bis 3,
**dadurch gekennzeichnet,**
**dass** die Auftragvorrichtung (6) auf einem Ring angeordnete Düsen umfasst, aus denen das Beschichtungsmaterial auf die Lanze (3) aufsprühbar ist.

## Claims

1. Smelting vessel plant (1) or metallurgical reaction vessel with a lance (3), which is furnished with a coating, wherein the coating contains boron nitride and/or boron carbide, which is applied, in particular, in the form of a ceramic paste to the lance (3), wherein the smelting vessel plant or the metallurgical reaction vessel comprises a coating device (6), which annularly surrounds the lance (3), for applying coating material, through which device the lance (3) can be guided, **characterised in that** strippers (7) are mounted on the coating device (6).

2. Smelting vessel plant (1) or metallurgical reaction vessel according to claim 1, **characterised in that** the strippers (7) are mounted in the form of flaps or stripper fingers on the coating device (6).

3. Smelting vessel plant (1) or metallurgical reaction vessel according to claim 1 or 2, **characterised in that** the strippers (7) are pivotably mounted on the coating device (6).

4. Smelting vessel plant (1) or metallurgical reaction vessel according to any one of claims 1 to 3, **characterised in that** the coating device (6) comprises nozzles which are arranged on a ring and from which coating material can be sprayed onto the lance (3).

## Revendications

1. Installation sous forme d'un récipient pour masse fondue (1) ou récipient pour réaction métallurgique comprenant une lance (3) qui est munie d'un revêtement, le revêtement contenant du nitrure de bore et/ou du carbure de bore, qui est appliqué en particulier sous la forme d'une pâte céramique sur la lance (3), l'installation sous forme d'un récipient pour masse fondue, respectivement le récipient pour réaction métallurgique présentant un dispositif d'application qui entoure la lance (3) sous la forme d'un anneau pour l'application de la matière d'enduction, à travers lequel peut passer la lance (3), **caractérisée en ce que** des déflecteurs (7) sont montés contre le dispositif d'application (6).

2. Installation sous forme d'un récipient pour masse fondue (1) ou récipient pour réaction métallurgique selon la revendication 1, **caractérisé en ce que** les déflecteurs (7) sont montés sous la forme de clapets ou de doigts de raclage contre le dispositif d'application (6).

3. Installation sous forme d'un récipient pour masse fondue (1) ou récipient pour réaction métallurgique selon la revendication 1 ou 2, **caractérisé en ce que** les déflecteurs (7) sont montés en pivotement contre le dispositif d'application (6).

4. Installation sous forme d'un récipient pour masse fondue (1) ou récipient pour réaction métallurgique selon l'une quelconque des revendications 1 à 3, **caractérisé en ce que** le dispositif d'application (6) comprend des buses disposées sur un anneau à partir desquelles la matière d'enduction peut venir s'appliquer par jaillissement sur la lance (3).
